# EUROPÄISCHE PATENTANMELDUNG

(11) **EP 4 173 692 A1**
(43) Veröffentlichungstag der Anmeldung: **03.05.2023**
(21) Anmeldenummer: 22197684.8
(22) Anmeldetag: 26.09.2022
(51) Int. Cl.: B01D 53/32, C25B 1/04, B32B 5/02

(54) **TEXTILES FLÄCHENGEBILDE ZUR ZERSETZUNG VON MOLEKÜLEN MITTELS ELEKTRO-KATALYTISCHER ELEKTROLYSE**

(30) Priorität: 27.10.2021 DE 102021128017
(71) Anmelder: TexoTex UG (haftungsbeschränkt), 84181 Neufraunhofen (DE)
(72) Erfinder: HAAS, Stefan, 84181 Neufraunhofen (DE)
(74) Vertreter: Ruckh, Rainer Gerhard

(57) **Zusammenfassung**

Die Erfindung betrifft ein textiles Flächengebilde (1) mit einem textilen Flächenelement (3) und einem mit diesem verbundenen Trägermaterial (2). Das textile Trägermaterial (2) weist eine Elektrodenstruktur auf. Das textile Flächenelement (3) weist eine Katalysatorstruktur und Zuführmittel auf, wobei die Zuführmittel ausgebildet sind, dem textilen Flächenelement (3) eine Elektrolytflüssigkeit zuzuführen. Bei einer an der Elektrodenstruktur anliegenden Spannung werden in der Elektrolytflüssigkeit des textilen Flächenelements (3) vorhandene Moleküle durch Elektrolyse zersetzt.

## Beschreibung

Die Erfindung betrifft ein textiles Flächengebilde.

Derartige textile Flächengebilde können beispielsweise Bekleidungsstücke ausbilden. Die Bekleidungsstücke können in bekannter Weise aus textilen Flächen wie Gewirken, Gestricken oder Geweben bestehen.

In den vergangenen Jahren sind verstärkt Funktionserweiterungen für Produkte im Bekleidungssektor entwickelt worden. Ein Beispiel hierfür ist die Einarbeitung von elektrisch leitfähigen Fäden in Form von Netzstrukturen, um so eine elektromagnetische Abschirmung für derartige Textilien zu erzielen. Weiterhin ist es bekannt, Transponder in Bekleidungsstücke einzuarbeiten. Aus den Transpondern können mittels RFID Lesegeräten Daten ausgelesen werden, wodurch eine eindeutige Identifizierung und damit Nachverfolgbarkeit der Bekleidungsstücke ermöglicht wird.

Weiterhin ist es bekannt textile Flächengebilde in industriellen Prozessen bzw. industriellen Produkten einzusetzen.

Aus der WO 2018/113993 A1 ist ein Verfahren bekannt, bei welchem Sensorstrukturen und Schnittfeststrukturen bei einem textilen Flächenelement mittels einer Kettenwirkmaschine oder Raschelmaschine hergestellt werden. Sensorfäden als Sensorstrukturen und schnittfeste Fäden als Schnittfeststrukturen sind auf derselben Seite des Flächenelements eingearbeitet. Die Fäden bestehen dabei aus metallischen, elektrisch leitfähigen Materialien. Die Sensorfäden sind dahingehend optimiert, damit mit diesen gut nachweisbare elektrische Signale generiert werden, welche in einer Messvorrichtung auswertbar sind, um im Fall einer Unterbrechung der Sensorfäden eine Alarmmeldung oder dergleichen generieren zu können.

Der Erfindung liegt die Aufgabe zugrunde, ein Flächenelement mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein textiles Flächengebilde mit einem textilen Flächenelement und einem mit diesem verbundenen Trägermaterial. Das textile Trägermaterial weist eine Elektrodenstruktur auf. Das textile Flächenelement weist eine Katalysatorstruktur und Zuführmittel auf, wobei die Zuführmittel ausgebildet sind, dem textilen Flächenelement eine Elektrolytflüssigkeit zuzuführen. Bei einer an der Elektrodenstruktur anliegenden Spannung werden in der Elektrolytflüssigkeit des textilen Flächenelements vorhandene Moleküle durch Elektrolyse zersetzt.

Das textile Flächengebilde bildet somit ein System mit dem Stoffe insbesondere Schadstoffe, aus der Umgebung eingefangen und dann mittels Elektrolyse zersetzt werden können. Generell können somit mit dem erfindungsgemäßen Flächengebilde in einer Umgebungsatmosphäre enthaltene, unerwünschte Stoffe zersetzt und mittels Elektrolyse in Endprodukte umgesetzt werden, die unkritisch sind und/oder für weitere Prozesse genutzt werden können. Dabei werden mittels Elektrolyse generell Moleküle in deren Bestandteile, insbesondere atomare Bestandteile zersetzt.

Die Konstruktion des erfindungsgemäßen textilen Flächengebildes ist derart, dass auf einem textilen Flächenelement des textilen Flächengebildes eine Katalysatorstruktur sowie Zuführmittel für eine Elektrolytflüssigkeit vorhanden sind.

Mit den Zuführmitteln wird die Elektrolytflüssigkeit flächig über das textile Flächenelement verteilt, so dass vorteilhaft das gesamte textile Flächenelement mit der Elektrolytflüssigkeit versetzt ist. Dabei ist die Elektrolytflüssigkeit auch in Kontakt mit der Katalysatorstruktur. Das erfindungsgemäße textile Flächengebilde weist als zweite Komponente ein Trägermaterial auf, das mit dem textilen Flächenelement verbunden ist, so dass das textile Flächengebilde eine Mehrschichtstruktur ausbildet.

Das Trägermaterial weist eine Elektrodenstruktur auf, die in an sich bekannter Weise wenigstens eine Anode und wenigstens eine Kathode aufweist. Diese Elektrolytstruktur kann an eine Spannungsquelle angeschlossen werden.

Die Funktionsweise des erfindungsgemäßen textilen Flächengebildes ist derart, dass in dessen Umgebung vorhandene Moleküle in der Elektrolytflüssigkeit des textilen Flächenelements angesammelt werden, insbesondere gelöst suspendiert oder dergleichen. Durch eine mit der Spannungsquelle angelegte Spannung erfolgt eine Elektrolyse der Moleküle in der Elektrolytflüssigkeit mit Hilfe der Katalysatorstruktur, das heißt es erfolgt eine katalytische Zersetzung der Moleküle.

Gemäß einer ersten Ausgestaltung kann mit dem textilen Flächengebilde Wasser per Elektrolyse zersetzt werden, wodurch Wasserstoff gewonnen werden kann.

Gemäß einer besonders vorteilhaften Ausführungsform wird das textile Flächengebilde dazu genutzt, per Elektrolyse in der Umgebung vorhandenes Kohlenstoffdioxid (CO₂) katalytisch zu zersetzen. Das Kohlenstoffdioxid aus der Umgebung wird in der Elektrolytflüssigkeit gelöst und dann mittels Katalysatorstruktur durch Anlegen einer Spannung an die Elektrodenstruktur katalytisch zersetzt.

Vorteilhaft besteht in diesem Fall die Katalysatorstruktur aus Gallium und/oder Indium und/oder Zinn und/oder Cer.

Kohlenstoffdioxid wird bei zahlreichen industriellen Prozessen als in die Umgebungsluft abgegebener Schadstoff erzeugt. Mit dem erfindungsgemäßen textilen Flächengebilde kann Kohlenstoffdioxid aus der Umgebungsluft entfernt werden, wobei bei der Katalyse unkritischer, unschädlicher fester Kohlenstoff entsteht.

Das textile Flächengebilde kann somit in unterschiedlichen industriellen Prozessen zur Schadstoffreinigung verwendet werden. Beispielsweise kann das erfindungsgemäße textile Flächengebilde in Kraftfahrzeugen mit Verbrennungsmotoren eingesetzt werden, um dort den Ausstoß an Kohlenstoffdioxid zu vermindern. Generell kann das erfindungsgemäße textilen Flächengebilde an Maschinen und Anlagen, die Kohlenstoffdioxid als Schadstoffe produzieren, eingesetzt werden. Insbesondere können die textilen Flächengebilde Bestandteil von Filteranlagen zur Luftreinigung sein.

Bei dem erfindungsgemäßen textilen Flächengebilde sind das Trägermaterial und das textile Flächenelement vollflächig miteinander verbunden, das heißt über die gesamte Fläche des textilen Flächengebildes und des Trägermaterial und das textile Flächenelement eng anliegend miteinander verbunden.

Dies wird insbesondere dadurch erreicht, dass das Trägermaterial und das textile Flächenelement durch Verkleben oder Vernähen miteinander verbunden sind.

Gemäß einer vorteilhaften Ausführungsform ist das Trägermaterial in Form einer Folie, insbesondere einer Kunststofffolie ausgebildet. In diesem Fall kann die Elektrodenstruktur auf die Folge aufgedruckt werden.

Gemäß einer alternativen Ausführungsform ist das Trägermaterial in Form eines weiteren textilen Flächenelements ausgebildet, das mit dem ersten textilen Flächenelement durch Vernähen oder durch Strick- oder Wirkprozesse verbunden werden kann.

In diesem Fall können die Elektrodenstrukturen in Form von elektrisch leitfähigen Drähten ausgebildet sein, die in das textile Flächenelement eingearbeitet werden. Insbesondere können die Drähte in das textile Flächenelement eingelegt und dort vernäht werden. Weiterhin ist möglich, die Elektrodenstruktur in Form elektrisch leitfähiger Fäden auszubilden, die durch Wirk-, Strickprozesse oder dergleichen in das textile Flächenelement eingearbeitet werden. Die elektrisch leitfähigen Fäden oder Drähte bestehen vorteilhaft aus metallischen Werkstoffen mit hoher elektrischer Leitfähigkeit.

Die dem Trägermaterial zugeordnete Spannungsquelle kann auf dem Trägermaterial selbst vorgesehen sein. Alternativ kann die Spannungsquelle auch außerhalb des Trägermaterials als separate Einheit vorgesehen sein. Generell kann auch eine Mehrfachanordnung von Spannungsquellen vorgesehen sein. In diesem Fall kann die Elektrodenstruktur mehrere Anoden und Kathoden aufweisen, wobei jeder Anode und Kathode eine Spannungsquelle zugeordnet sein kann. Generell ist die Elektrodenstruktur so ausgebildet, dass sich diese über das gesamte Trägermaterial erstreckt.

Das oder jedes textile Flächenelement des textilen Flächengebildes kann von einem Vlies, einem Gewebe, einem Gewirke oder einem Gestrick ausgebildet sein.

Das textile Flächenelement mit der Katalysatorstruktur weist generell Zuführmittel zur Zuführung der Elektrolytflüssigkeit auf, wobei die Zuführmittel so ausgebildet sind, dass das gesamt textile Flächenelement mit der Elektrolytflüssigkeit versetzt wird.

Gemäß einer vorteilhaften Ausführungsform sind die Zuführmittel in Form einer Anordnung von Öffnungen aufweisenden Schläuchen ausgebildet, wobei die Elektrolytflüssigkeit in den Schläuchen geführt und über die Öffnungen auf das textile Flächenelement ausgegeben wird.

Generell können ein oder mehrere Schläuche vorgesehen sein, die sich über die gesamte Fläche des textilen Flächenelements erstrecken. Die Öffnungen sind in den Schläuchen so verteilt, dass mit der über diese Öffnungen austretenden Elektrolyseflüssigkeit das gesamte textile Flächenelement mit der Elektrolyseflüssigkeit versetzt wird.

Gemäß einer ersten Variante weist die Katalysatorstruktur einen flüssigen Katalysator auf.

Wie die Elektrolyseflüssigkeit ist dann der flüssige Katalysator in Zuführmitteln geführt, mittels derer dieser flüssige Katalysator dem textilen Flächenelement zugeführt wird.

Vorteilhaft ist der flüssige Katalysator in einer Anordnung von Öffnungen aufweisenden Schläuchen geführt und wird über die Öffnungen der Schläuche auf das textile Flächenelement ausgegeben.

Dabei kann der Katalysator mit der Elektrolytflüssigkeit im selben Schlauchsystem geführt werden. Alternativ können der flüssige Katalysator und die Elektrolytflüssigkeit in separaten Schlauchsystemen geführt werden.

Generell können die Schläuche durch Vernähen, Verzwirnen oder Verkleben auf dem textilen Flächenelement fixiert sein.

Gemäß einer zweiten Variante ist der Katalysator in Form von Drähten ausgebildet, die in das textile Flächenelement eingearbeitet sind.

Die Drähte können in das textile Flächenelement eingelegt und durch Vernähen fixiert werden. Alternativ können die Drähte in Form von Fäden ausgebildet sein, die durch Wirk-, Strickprozesse oder dergleichen in das textile Flächenelement eingearbeitet werden.

Die Erfindung wird im Folgenden anhand der Zeichnungen erläutert. Es zeigen
- Figur 1:: Schematische Darstellung eines Ausführungsbeispiels des erfindungsgemäßen textilen Flächengebildes.
- Figur 2:: Ausführungsbeispiel eines Trägermaterials mit einer Elektrodenstruktur für das textile Flächengebilde gemäß Figur 1.
- Figur 3:: Erstes Ausführungsbeispiel eines textilen Flächenelements mit einer Katalysatorstruktur und mit Zuführmitteln für eine
- Figur 4:: Zweites Ausführungsbeispiel eines textilen Flächenelements mit Zuführmitteln für einen flüssigen Katalysator und eine Elektrolytflüssigkeit.

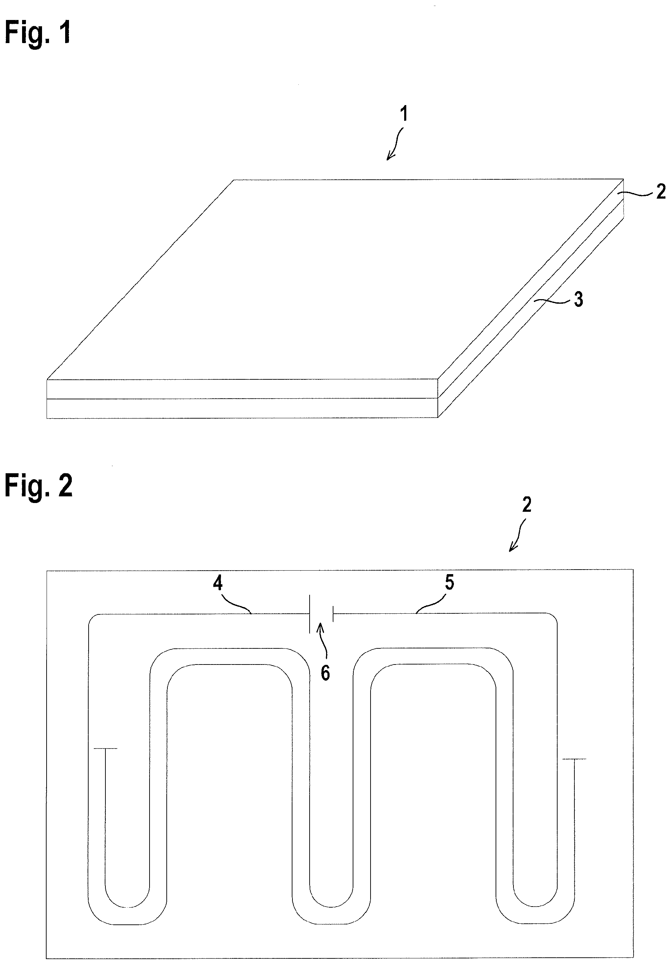

Figur 1 zeigt in stark schematisierter Form eine Ausführungsform des erfindungsgemäßen textilen Flächengebildes 1. Das textile Flächengebilde 1 dient generell zur Zersetzung von Molekülen mittels katalytischer Elektrolyse. Generell werden in der Umgebungsatmosphäre vorhandene Moleküle im textilen Flächengebilde 1 gebunden und dann mittels der katalytischen Elektrolyse zersetzt.

Mit dem textilen Flächengebilde 1 können je nach konstruktiver Ausbildung unterschiedliche Moleküle zersetzt werden. Im vorliegenden Fall erfolgt eine katalytische Zersetzung von Kohlenstoffdioxid (CO₂).

Das textile Flächengebilde 1 umfasst ein flächiges Trägermaterial 2 und ein textiles Flächenelement 3, die dicht aufeinanderliegend miteinander verbunden sind, beispielsweise durch Verkleben oder Vernähen. Das Trägermaterial 2 und das textile Flächenelement 3 sind flächengleich, so dass diese über ihre gesamten Oberflächen aufeinander liegen.

Das Trägermaterial 2 weist, wie Figur 2 zeigt, an einer dem textilen Flächenelement 3 zugeordneten Oberfläche eine Elektrodenstruktur auf. Die Elektrodenstruktur umfasst im vorliegenden Fall eine Anode 4 und eine Kathode 5, die in Abstand zueinander liegend auf dem Trägermaterial 2 angeordnet sind und an eine Spannungsquelle 6 in Form einer Gleichspannungsquelle angeschlossen sind. Die Anode 4 und Kathode 5 verlaufen mäanderförmig und erstrecken sich über nahezu die gesamte Fläche des Trägermaterials 2. Die Spannungsquelle 6 ist im vorliegenden Fall auf dem Trägermaterial 2 angeordnet. Generell kann die Spannungsquelle 6 auch eine separate Einheit außerhalb des Trägermaterials 2 bilden. Weiterhin können auch mehrere Spannungsquellen 6 angeordnet sein, wobei dann auch mehrere Anoden-/Kathodenpaare vorgesehen sein können, die jeweils einer Spannungsquelle 6 zugeordnet sind.

Das Trägermaterial 2 kann von einer Folie, insbesondere Kunststofffolie gebildet sein. In diesem Fall kann die Elektrodenstruktur durch eine Bedruckung auf dem Trägermaterial 2 aufgebracht werden.

Alternativ kann das Trägermaterial 2 in Form einer textilen Fläche wie z.B. einem Vlies, einem Gewebe, einem Gewirke oder einem Gestrick ausgebildet sein.

In diesem Fall besteht die Elektrodenstruktur aus elektrisch leitfähigen Drähten, die in die textile Fläche eingenäht werden können. Auch können die Drähte als elektrisch leitfähige Fäden ausgebildet sein, die durch Strick-, Wirkprozesse oder dergleichen in das Trägermaterial 2 eingearbeitet werden.

Generell besteht die Elektrodenstruktur aus einem hochleitfähigen metallischen Werkstoff.

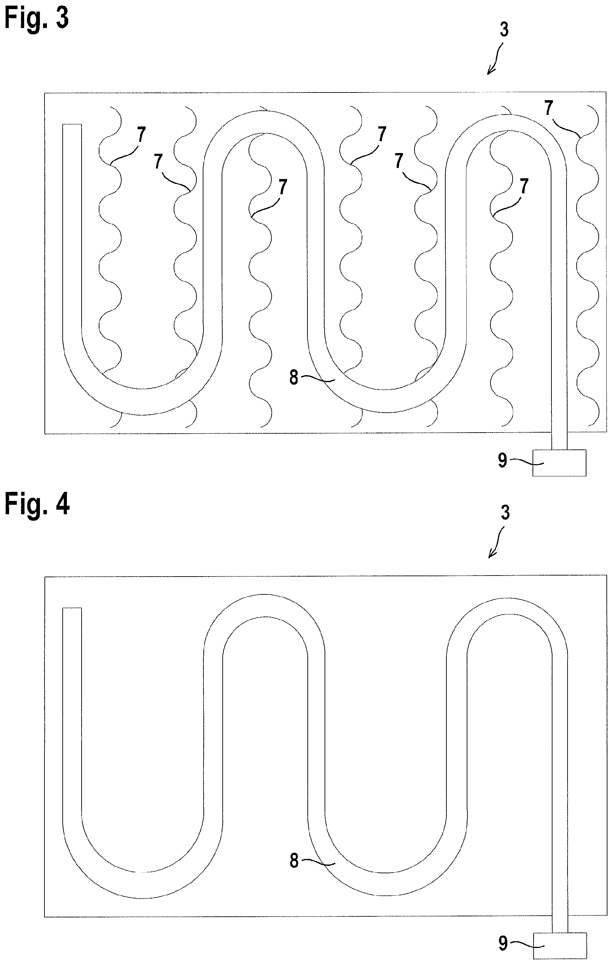

Figur 3 zeigt eine erste Ausführungsform des textilen Flächenelements 3 des erfindungsgemäßen textilen Flächengebildes 1. Das textile Flächenelement 3 besteht beispielsweise aus einem Vlies, einem Gewebe, einem Gewirke oder einem Gestrick.

In das textile Flächenelement 3 ist eine Katalysatorstruktur in Form von Katalysator-Drähten 7 beziehungsweise Katalysator-Fäden eingearbeitet. Die Katalysator-Drähte 7 können in das textile Flächenelement 3 eingelegt und dort vernäht sein. Die Katalysator-Fäden können durch Wirk-, Strickprozesse oder dergleichen in das textile Flächenelement 3 eingearbeitet sein. Im vorliegenden Fall ist eine Anordnung von parallel in Abstand zueinander verlaufenden Katalysator-Drähten 7 vorgesehen, die sich über die gesamte Fläche des textilen Flächenelement 3 erstrecken. Alternativ kann auch eine Gitterstruktur von Katalysator-Drähten 7 vorgesehen sein.

Entsprechend der Funktion des textilen Flächengebildes 1, Kohlenstoffdioxid mittels einer katalytischen Elektrolyse zu versetzen, besteht die Katalysatorstruktur, wie auch bei der Ausführungsform gemäß Figur 4 aus Gallium und/oder Indium und/oder Zinn und/oder Cer.

Das textile Flächenelement 3 gemäß Figur 3 weist weiterhin Zuführmittel auf, mittels derer eine Elektrolytflüssigkeit dem textilen Flächenelement 3 zugeführt wird. Im vorliegenden Fall ist als Zuführmittel ein Schlauch 8 vorgesehen, in dem die Elektrolytflüssigkeit geführt wird. Der Schlauch 8 kann durch Vernähen, Verzwirnen oder Verkleben auf dem textilen Flächenelement 3 fixiert werden. Die Elektrolytflüssigkeit wird über einen Anschluss 9 dem Schlauch 8 zugeführt. Der Schlauch 8 verläuft mäanderförmig und erstreckt sich über die gesamte Fläche des textilen Flächenelements 3. In dem Schlauch 8 sind nicht dargestellte Öffnungen vorgesehen, die über die gesamte Länge des Schlauchs 8 gleichförmig verteilt sind. Elektrolytflüssigkeit, die über den Anschluss 9 dem Schlauch 8 zugeführt wird, tritt über die Öffnungen aus, so dass das textile Flächenelement 3 über seine gesamte Fläche mit Elektrolytflüssigkeit versetzt wird.

In dem mit Elektrolytflüssigkeit versetzten textilen Flächenelement 3 wird Kohlenstoffdioxid aus der Umgebung gebunden. Durch Anlegen einer Spannung an die Spannungsquelle 6 erfolgt mittels Elektrolyse die Zersetzung des Kohlenstoffdioxids, wobei die Elektrolyse mittels der Katalysatorstruktur katalytisch unterstützt wird. Bei der Elektrolyse des Kohlenstoffdioxids entsteht fester Kohlenstoff.

Figur 4 zeigt ein weiteres Ausführungsbeispiel des textilen Flächenelements 3. Dieses textile Flächenelement 3 unterscheidet sich von der Ausführungsform gemäß Figur 3 dadurch, dass in dem Schlauch 8 sowohl die Elektrolytflüssigkeit als auch der Katalysator in flüssiger Form geführt ist. Die Elektrolytflüssigkeit und der flüssige Katalysator werden über die Öffnungen des Schlauchs 8 auf das textile Flächenelement 3 ausgetragen.

Generell können die Elektrolytflüssigkeit und der flüssige Katalysator auch in separaten Schläuchen 8 mit Öffnungen geführt werden.

### B ezugszei chenli ste

- (1): textiles Flächengebilde
- (2): Trägermaterial
- (3): textiles Flächenelement
- (4): Anode
- (5): Kathode
- (6): Spannungsquelle
- (7): Katalysator-Drähte
- (8): Schlauch
- (9): Anschluss

## Patentansprüche

1. Textiles Flächengebilde (1) mit einem textilen Flächenelement (3) und einem mit diesem verbundenen Trägermaterial (2), **dadurch gekennzeichnet, dass** das textile Trägermaterial (2) eine Elektrodenstruktur aufweist, und dass das textile Flächenelement (3) eine Katalysatorstruktur und Zuführmittel aufweist, wobei die Zuführmittel ausgebildet sind, dem textilen Flächenelement (3) eine Elektrolytflüssigkeit zuzuführen, und dass bei einer an der Elektrodenstruktur anliegenden Spannung in der Elektrolytflüssigkeit des textilen Flächenelements (3) vorhandene Moleküle durch Elektrolyse zersetzt werden.

2. Textiles Flächengebilde (1) nach Anspruch 1, **dadurch gekennzeichnet, dass** bei der Elektrolyse Kohlenstoffdioxid (CO₂) zersetzt wird.

3. Textiles Flächengebilde (1) nach Anspruch 2, **dadurch gekennzeichnet, dass** bei der Elektrolyse von Kohlenstoffdioxid fester Kohlenstoff erzeugt wird.

4. Textiles Flächengebilde (1) nach einem der Ansprüche 2 oder 3, **dadurch gekennzeichnet, dass** die Katalysatorstruktur aus Gallium und/oder Indium und/oder Zinn und/oder Cer besteht.

5. Textiles Flächengebilde (1) nach einem der Ansprüche 1 bis 4, **dadurch gekennzeichnet, dass** das Trägermaterial (2) und das textile Flächenelement (3) durch Verkleben oder Vernähen miteinander verbunden sind.

6. Textiles Flächengebilde (1) nach einem der Ansprüche 1 bis 5, **dadurch gekennzeichnet, dass** das Trägermaterial (2) eine Folie oder ein weiteres textiles Flächenelement ist.

7. Textiles Flächengebilde (1) nach einem der Ansprüche 1 bis 6, **dadurch gekennzeichnet, dass** die Elektrodenstruktur auf das Trägermaterial (2) aufgedruckt ist, oder dass die Elektrodenstruktur aus elektrisch leitfähigen Drähten besteht, die in das Trägermaterial (2) eingearbeitet sind.

8. Textiles Flächengebilde (1) nach einem der Ansprüche 1 bis 7, **dadurch gekennzeichnet, dass** die Elektrodenstruktur an wenigstens eine Spannungsquelle (6) angeschlossen ist.

9. Textiles Flächengebilde (1) nach einem der Ansprüche 1 bis 8, **dadurch gekennzeichnet, dass** das textile Flächenelement (3) ein Vlies, ein Gewebe, ein Gewirke oder ein Gestrick ist.

10. Textiles Flächengebilde (1) nach einem der Ansprüche 6 bis 9, **dadurch gekennzeichnet, dass** das weitere textile Flächenelement ein Vlies, ein Gewebe, ein Gewirke oder ein Gestrick ist.

11. Textiles Flächengebilde (1) nach einem der Ansprüche 1 bis 10, **dadurch gekennzeichnet, dass** die Zuführmittel in Form einer Anordnung von Öffnungen aufweisenden Schläuchen (8) ausgebildet sind, wobei die Elektrolytflüssigkeit in den Schläuchen (8) geführt und über die Öffnungen auf das textile Flächenelement (3) ausgegeben wird.

12. Textiles Flächengebilde (1) nach einem der Ansprüche 1 bis 11, **dadurch gekennzeichnet, dass** die Katalysatorstruktur einen flüssigen Katalysator aufweist.

13. Textiles Flächengebilde (1) nach Anspruch 12, **dadurch gekennzeichnet, dass** der flüssige Katalysator in einer Anordnung von Öffnungen aufweisenden Schläuchen (8) geführt ist, und über die Öffnungen der Schläuche (8) auf das textile Flächenelement (3) ausgegeben wird.

14. Textiles Flächengebilde (1) nach einem der Ansprüche 11 bis 13, **dadurch gekennzeichnet, dass** die Schläuche (8) durch Vernähen, Verzwirnen oder Verkleben auf dem textilen Flächenelement (3) fixiert sind.

15. Textiles Flächengebilde (1) nach einem der Ansprüche 1 bis 13, **dadurch gekennzeichnet, dass** der Katalysator in Form von Drähten ausgebildet ist, die in das textile Flächenelement (3) eingearbeitet sind.
